# EUROPEAN PATENT APPLICATION

(11) **EP 3 015 300 A1**
(43) Date of publication of application: **04.05.2016**
(21) Application number: 15191596.4
(22) Date of filing: 27.10.2015
(51) Int. Cl.: B60J 5/06

(54) **A CURTAIN ASSEMBLY**

(30) Priority: 31.10.2014 AU 2014256398
(71) Applicant: Iona Automotive Pty Ltd, Iona, Victoria 3815 (AU)
(72) Inventor: DONALDSON, Arthur Douglas, Iona, Victoria 3815 (AU); CHARLES, Alan Maurice, Doncaster, Victoria 3108 (AU)
(74) Representative: Zacco Sweden AB

(57) **Abstract**

A curtain assembly for a vehicle body comprising a curtain rail, a curtain that is slidable along the curtain rail to move the curtain between an open position and a closed position, and an actuator that is operable to (i) raise and tension the curtain when the curtain is in the closed position and (ii) lower the curtain to release the tension, such that the curtain is movable to the open position.

## Description

### FIELD OF INVENTION

The present invention relates to a curtain assembly for a vehicle body, particularly, a side curtain assembly for a truck or (semi-)trailer.

### BACKGROUND OF THE INVENTION

Side curtains for a vehicle body such as a truck or a (semi-)trailer are typically used to conceal and restrain a load within the vehicle body. A side curtain is usually made of a flexible material that is slidable along a rail that extends along the top of the vehicle body to conceal or reveal the load.

The side curtain is usually tensioned in a horizontal direction and buckles are located along the length of the curtain to allow vertical tensioning. In this respect, the buckles tension the curtain in a vertical direction by reducing the effective length of the curtain. This creates a taut curtain which improves the ability of the curtain to restrain a load in the vehicle body.

However, it is time consuming to operate conventional side curtains because a curtain commonly has multiple buckles along the length of the curtain to ensure that the curtain is adequately tensioned. As a result, a user has to manipulate every buckle every time a load is loaded onto or removed from the vehicle body.

Another disadvantage of conventional side curtains is that the presence of multiple buckles increases the likelihood that at least one of the buckles would fail. This may pose a hazard particularly when the curtain is not adequately tensioned and cannot effectively act as a load restraint. A further disadvantage is that the presence of the buckles on the outer surface of the curtain reduces the visual appeal of the curtain, particularly, when the curtain is to be printed with advertising or branding.

Accordingly, it is desirable to provide a curtain assembly that can be tensioned in a time efficient manner. Preferably, the curtain assembly provides a visually appealing surface for printing or branding.

### SUMMARY OF THE INVENTION

In one form of the invention, there is provided a curtain assembly for a vehicle body comprising:
a curtain rail;
a curtain that is slidable along the curtain rail to move the curtain between an open position and a closed position; and
an actuator that is operable to (i) raise and tension the curtain when the curtain is in the closed position and (ii) lower the curtain to release the tension, such that the curtain is movable to the open position.

The term "vehicle body" embraces a range of vehicles including a truck body, a trailer body, a (semi-)trailer body and the like.

In the closed position, the curtain is typically unfurled to conceal a load in the vehicle body. In the open position, the curtain is folded to reveal the load in the vehicle body.

Suitably, in the closed position, the curtain is tensioned in both the horizontal and vertical directions. The tensioned curtain enhances the ability of the curtain to act as a load restraint. The tensioned curtain also provides a visually appealing surface for printing or branding.

According to the present invention, tensioning of the curtain in a vertical direction is effected without reducing the effective height of the curtain. In contrast, a conventional curtain assembly using buckles relies on a reduction in the effective height of the curtain to tension the curtain, whereby the buckles fold or crease the curtain horizontally to tension the curtain vertically.

The actuator may be operable to raise and lower the curtain rail. This allows the curtain to be raised and lowered uniformly. Suitably, the actuator is operable to tension the curtain vertically when raised.

The actuator may be operable to move the curtain rail along a surface to raise the curtain. For example, the actuator is operable to move the curtain rail along a surface having an upwardly inclined plane. As a consequence, the curtain rail is vertically displaced as the curtain rail travels up or down the inclined plane. This reduces the power load on the actuator compared to lifting the curtain rail vertically as the actuator is not required to bear the entire weight of the curtain.

The curtain assembly may include a profiled surface having crests and troughs on which the curtain rail is seated. The curtain rail is raised and lowered when the actuator moves the curtain rail along the profiled surface.

The profiled surface may include at least one inclined plane for raising and lowering the curtain rail when the curtain rail moves along the at least one inclined surface.

The curtain rail may be slidably retained within a support rail including the profiled surface. The support rail may include a channel for receiving the curtain rail.

The curtain rail slides within the channel such that the vertical displacement of the curtain rail is controlled by the crests and troughs of the profiled surface.

Suitably, the support rail is mounted on top of a vehicle body. Preferably, the support rail is fixedly mounted to the top of the vehicle body. In some embodiments, the support rail forms part of the vehicle body, for example, the frame of a truck or (semi-)trailer body. The support rail may provide structural support to the vehicle body.

The curtain rail may include a roller for rolling/travelling along the profiled surface. In this form, it may be known as a curtain rail assembly. References to a curtain rail are applicable to references to a curtain rail assembly.

The roller reduces friction between the curtain rail assembly and the profiled surface. Suitably, the curtain rail assembly includes at least two rollers that are spaced apart along the length of the curtain rail assembly to reduce the weight borne by each roller.

The profiled surface may comprise a plurality of inclined planes, in the form of ramps, positioned along the length of the support rail. Having a plurality of ramps distributes the weight of the curtain rail between the ramps and reduces the likelihood of mechanical failure of the curtain rail. For example, resting the curtain rail on one ramp increases the likelihood of the curtain rail failing at the point of contact as the curtain rail flexes about the ramp.

At least one of the inclined planes has an angle ranging from 20°-40° from the horizontal plane. Preferably, at least one of the inclined planes has an angle of 30° from the horizontal plane.

The ramp may include at least one inclined surface and one horizontal surface. The inclined surface allows the curtain rail to move vertically when the curtain rail travels up and down the inclined surface. The horizontal surface reduces slippage of the curtain rail by providing a resting surface for the curtain rail in the raised or lowered position.

Suitably, the ramp has a trapezium cross-section. Preferably, the trapezium includes one right angle (i.e. a truncated right-angled triangle cross-section). Suitably, the positions of the ramp and the roller are aligned. The actuator may be operable to move the curtain rail forward and backward along the profiled surface. Preferably, the actuator is operable to move the curtain rail forward up the ramp to raise the curtain and backwards to move the curtain rail down the ramp to lower the curtain. In an embodiment, the curtain assembly includes a plurality of aligned ramps and rollers.

The ramp may be in the form of a ramp plate mounted onto a base rail. A ramp assembly comprising a plurality of ramp plates mounted on a base rail may be fixed onto the support rail such that the curtain rail travels along the ramp assembly. The ramp plates and rollers of the curtain rail may be aligned. The ramp assembly may be removable to allow facilitate repair or replacement of the ramps.

Advantageously, the ramp does not include any movable parts, which minimises the likelihood of mechanical failure.

Alternatively, the actuator may include a cam that engages the curtain rail to raise and lower the curtain rail. In this respect, the curtain rail is vertically displaced as the curtain rail travels on the cam.

The curtain rail may include a channel for receiving a curtain roller assembly, which may include a pair of rollers for sliding in the channel of the curtain rail.

Suitably, the curtain is attached to the curtain roller assembly. This allows the curtain to move into the open or closed position by sliding the curtain roller assembly in the channel of the curtain rail. The curtain may be raised or lowered by moving the curtain rail along the profiled surface.

The curtain may include a plurality of attachment means for engaging the vehicle body. This provides an anchor point to facilitate tensioning of the curtain.

The attachment means may be in the form of hooks, hook and loop fasteners, clips or the like.

An edge of the curtain may be attached to a curtain pole which is rotatable by a ratchet mechanism to tension the curtain horizontally in the closed position. Preferably, a vertical edge of the curtain is attached to the curtain pole.

In an embodiment, the top horizontal edge of the curtain is slidably mounted to the curtain rail and the bottom horizontal edge of the curtain includes the plurality of attachment means for securing the bottom horizontal edge of the curtain to the vehicle body.

In operation, the attachment means may engage the bottom of the vehicle body as the curtain is raised to provide an anchor point for tensioning the curtain. The attachment means may be detachable from the vehicle body when the curtain is lowered to facilitate movement of the curtain to the open position.

The curtain assembly may be automated to move the curtain between the open and closed positions and/or raise and lower the curtain.

Advantageously, the curtain assembly provides a time efficient method for tensioning the curtain. The curtain assembly does not use buckles positioned on the external surface of the curtain. This provides a visually appealing surface for printing and branding. This also eliminates the risk of buckle failure.

In another form of the invention, there is provided a method of operating a curtain on a vehicle body including the steps of:
sliding a curtain movably connected to a curtain rail to move the curtain between an open position to a closed position; and
raising and lowering the curtain to tension the curtain and release the tension such that the curtain is movable to the open position.

The step of raising the curtain may involve lifting the curtain rail. Alternatively, the step of raising the curtain rail involves moving the curtain rail up an inclined plane.

The method may include a step of engaging a bottom edge of the curtain to the vehicle body during raising of the curtain to facilitate tensioning of the curtain.

The step of lowering the curtain may involve lowering the curtain rail. Alternatively, the step of lowering the curtain rail involves moving the curtain rail down an inclined plane.

The method may include a step of disengaging a bottom edge of the curtain to the vehicle body after lowering the curtain to facilitate moving the curtain to the open position.

### BRIEF DESCRIPTION OF DRAWINGS

A preferred embodiment of the present invention is hereinafter described by way of example only, with reference to the accompanying drawings, wherein:
Figure 1 is a cross-sectional view of a curtain assembly according to one form of the invention.
Figure 2 is an isometric view of the curtain assembly of Figure 1 in the open position.
Figure 3 is an isometric view of the curtain assembly of Figure 1 in the closed position.
Figure 4A is a cross-sectional view of a curtain rail assembly of the curtain assembly of Figure 1.
Figure 4B is a cross-sectional view of a curtain roller assembly that interfits with the curtain rail assembly of Figure 4A.
Figure 5 is a cross-sectional view of a support rail of the curtain assembly of Figure 1.
Figure 6 is a cross-sectional view of the support rail of

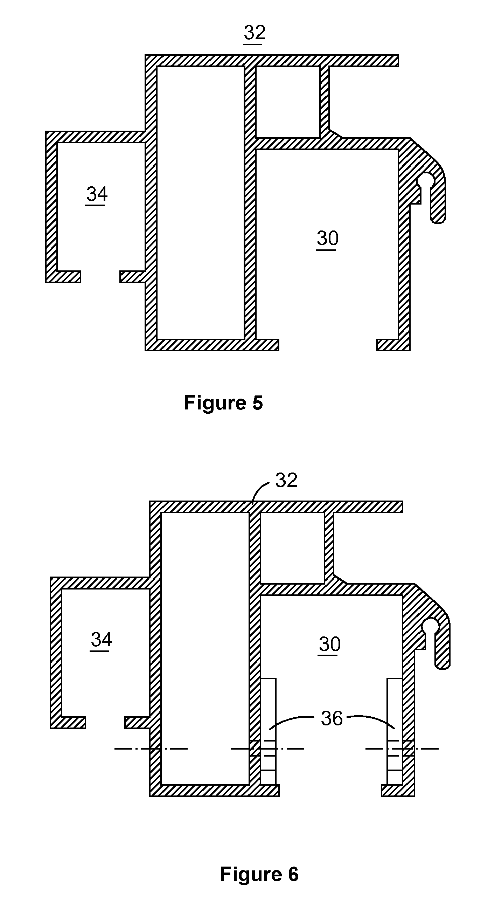

Figure 5 including a pair of ramp assemblies.

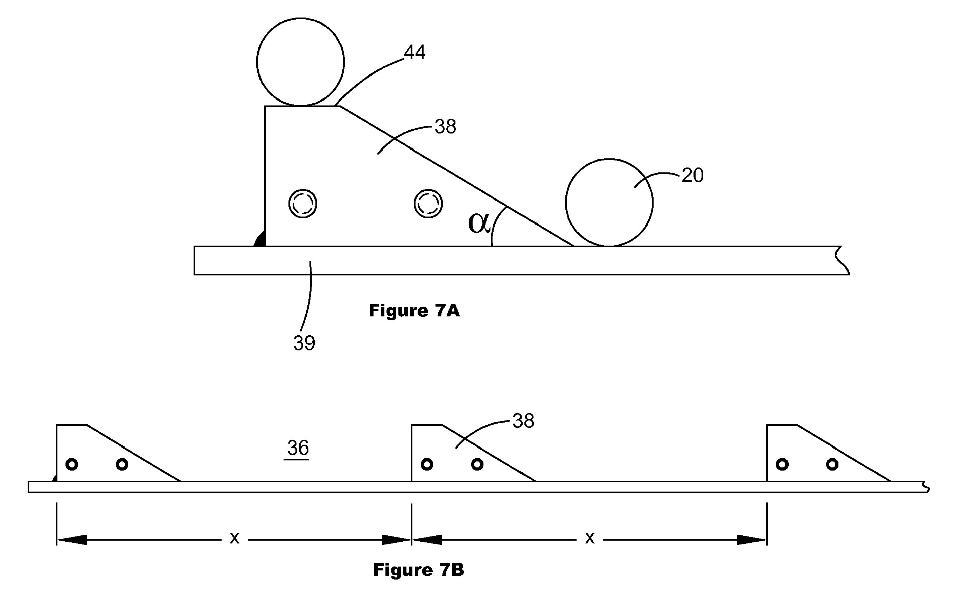

Figure 7A is a side elevation view of a ramp of the ramp assembly in Figure 6.
Figure 7B is a side elevation view of a ramp assembly in Figure 6.

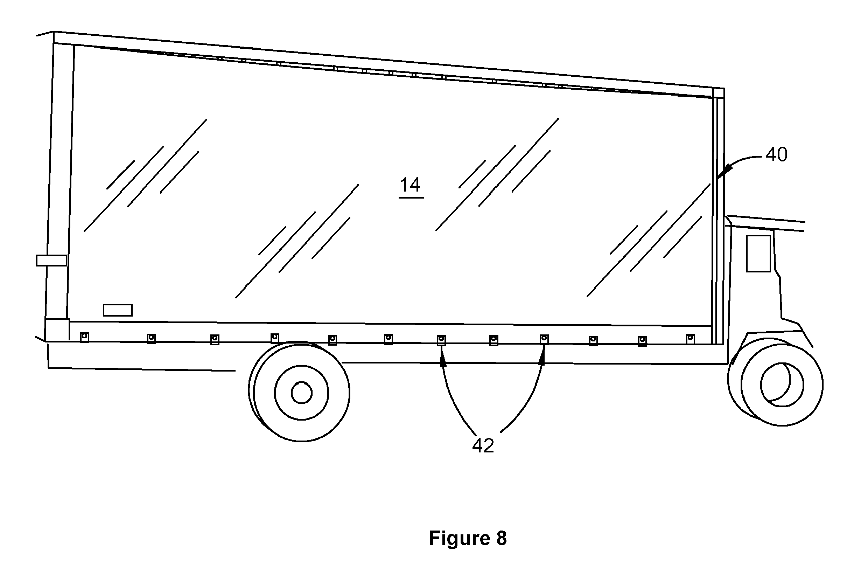

Figure 8 is an isometric view of the curtain assembly in a closed position with the curtain horizontally and vertically tensioned.

### DETAILED DESCRIPTION

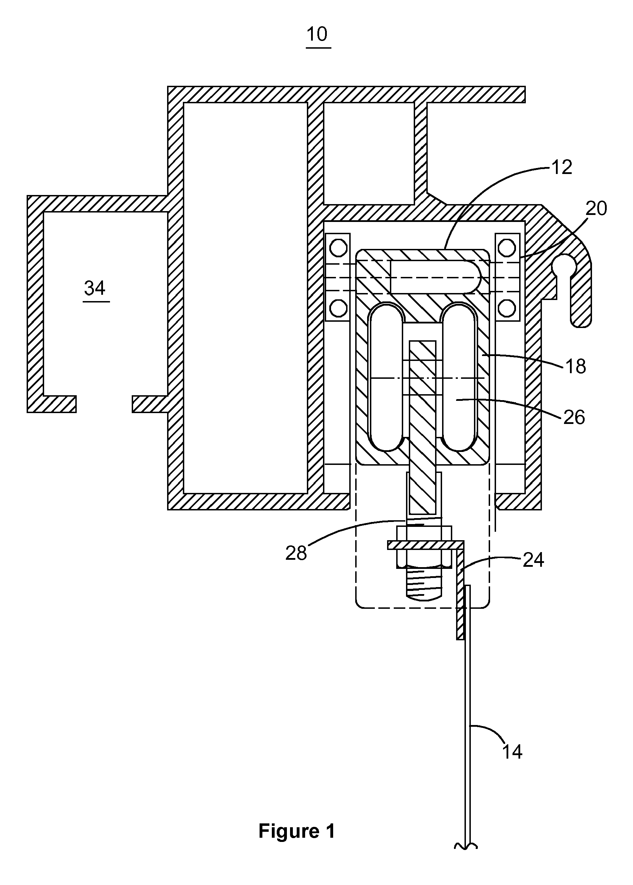

One aspect of curtain assembly as defined by the invention is marked as 10 in Figure 1.

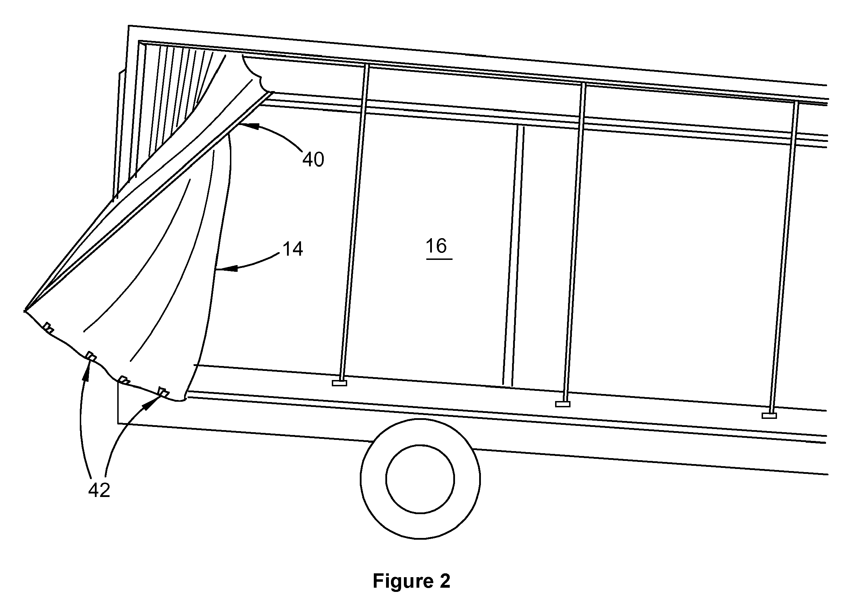

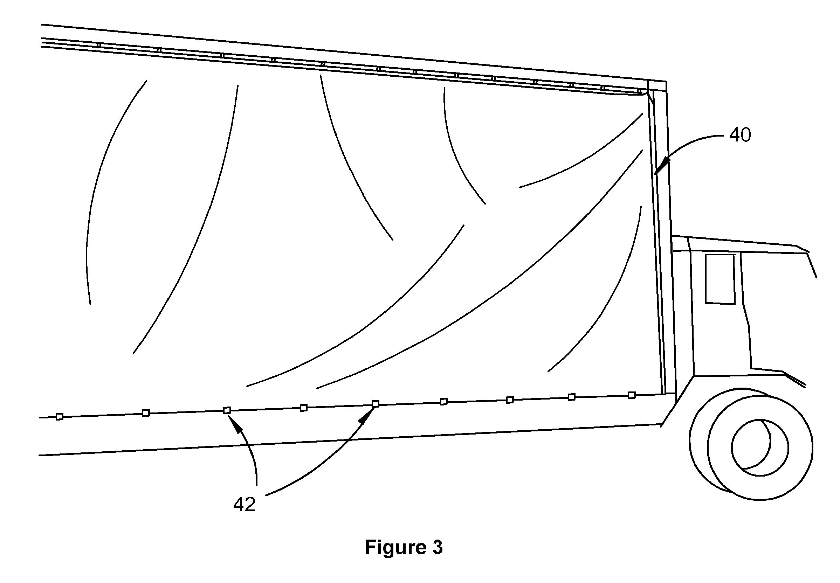

The curtain assembly 10 comprises a curtain rail assembly 12 and a curtain 14 that is movably connected to the curtain rail assembly 12 such that the curtain 14 is slidable along the curtain rail assembly 12 to move the curtain 14 between an opened position (Figure 2) and a closed position (Figure 3) along the vehicle body. The vehicle body illustrated in the figures is in the form of a (semi-)trailer body 16.

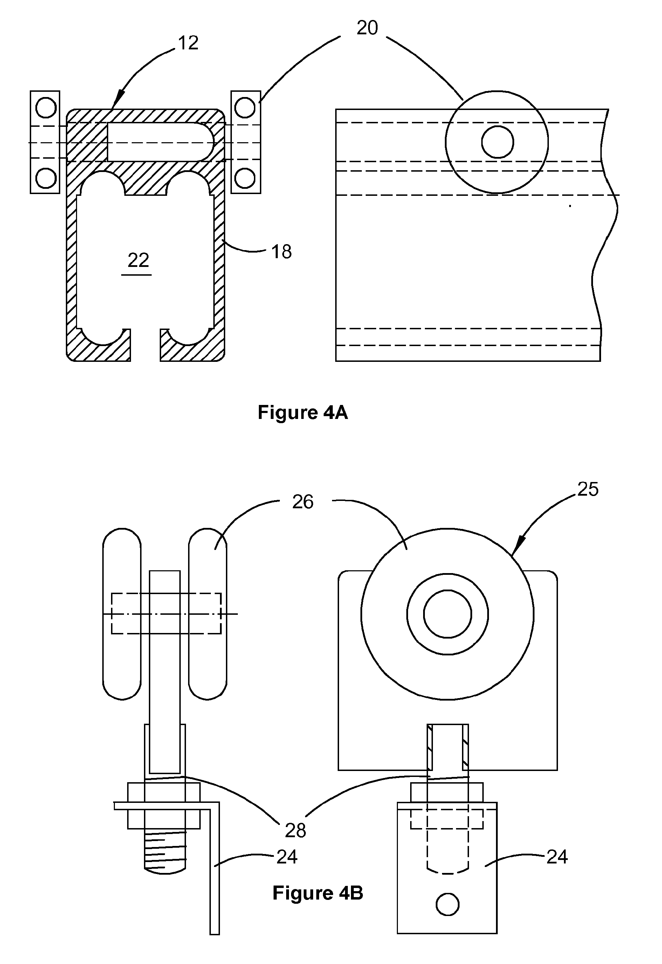

The curtain rail assembly 12 comprises a curtain extrusion 18 including a pair of rail rollers 20 positioned on either side of the curtain extrusion 18 and a curtain rail channel 22 for receiving a curtain roller assembly 25 (Figure 4B). The curtain roller assembly 25 includes a pair of curtain rollers 26 for sliding on the track of curtain rail channel 22.

The curtain 14 is mounted onto a pivotal curtain attachment bracket 24, which in turn, is mounted to the curtain roller assembly 25 via a bolt 28. Suitably, the curtain 14 is secured at equal intervals along its length via the pivotal curtain attachment bracket 24. This distributes the weight and load of the curtain 14 along the length of the curtain rail assembly 12.

In this respect, typically, the curtain rail assembly 12 is 7.2 m long. Based on a spacing of 0.60 m between each curtain roller assembly 25, there will be twelve screws and twelve pairs of curtain rollers 26 along the length of the curtain rail assembly 12.

The curtain roller assemblies 25 are retained within the curtain rail channel 22 of the curtain extrusion 18 such that the curtain rollers 26 are slidable within the curtain rail channel 22 of the curtain rail assembly 12 to move the curtain 14 between the opened and closed positions (Figure 4B).

The curtain rail assembly comprises the curtain extrusion 18 having a plurality of rail rollers 20 spaced at equal intervals x (Figure 7B) along the length of the extrusion 18. Suitably, there are twelve sets of rail rollers 20 along the length of the curtain extrusion 18.

The curtain rail assembly 12 is fitted into the support rail channel 30 of the support rail 32. The support rail 32 also includes a mounting channel 34 for connecting the support rail 32 to the frame of the (semi-)trailer body 16 (Figure 5). Alternatively, the support rail 32 is integrally formed with the frame of the (semi-)trailer body 16.

Ramp assembly 36 which provide a profiled surface to the support rail 32 to enable vertical displacement of the curtain rail assembly 12 is installed onto the sides of the support rail channel 30 (Figure 6). The rail rollers 20 travel move up and down the inclined plane of the ramp assembly 36 to raise and lower the curtain rail assembly 12.

Each ramp assembly 36 comprises a plurality of ramp plates 38 having a truncated right-angled triangle cross section mounted onto a base rail 39 (Figure 7B). The ramp plates 38 are spaced at equal intervals along the base rail 39. Preferably, each ramp plate 38 has an inclined plane angled 30° from the horizontal plane (α) (Figure 7A). However, the ramp plate 38 can have an angle ranging from 20°-40°.

Suitably, individual pairs of ramp plates 38 are aligned with the rail rollers 20 to distribute the weight and load of the curtain rail assembly 12 between the ramp plates 38.

In an alternative embodiment, the curtain rail assembly 12 rests on a cam which is rotatable to impart vertical displacement to the curtain rail assembly 12 (not illustrated in the Figures). In this embodiment, ramp assemblies 36 are not used.

An actuator is operable to raise and tension the curtain 14 when the curtain 14 is in the closed position and lower the curtain 14 to release the tension. Figure 8 illustrates the tensioned curtain after the curtain 14 in Figure 3 is raised by the actuator.

In this example, the actuator is operable to raise and lower the curtain rail assembly 12, which in turn, raises and lowers the curtain 14 uniformly. In other embodiments, the actuator may be connected directly to the curtain 14 to raise and lower the curtain.

A vertical edge of the curtain 14 is affixed to a curtain pole 40 to facilitate movement of the curtain 14 between the open and closed positions. In the closed position, the curtain pole 40 is engageable with a ratchet mechanism to allow the curtain to be tensioned horizontally.

The bottom horizontal edge of the curtain 14 includes a plurality of attachment means, in the form of hooks 42, which engage the base of the (semi-)trailer body 16 when the curtain 14 is raised to facilitate tensioning of the curtain 14. The hooks 42 disengage from the base of the (semi-)trailer body 16 when the curtain 14 is lowered. In alternative embodiments, the bottom horizontal edge of the curtain 14 may be movably connected to the bottom of the (semi-)trailer body 16, for example, via clips to the base of the (semi-)trailer body 16. This allows the curtain 14 to slide horizontally between the open and closed position without allowing the bottom horizontal edge of the curtain 14 to be detached from the (semi-)trailer body 16.

In operation, a user moves the curtain 14 from the open position to the closed position by pulling the curtain 14 along the length of the (semi-)trailer body 16 to unfurl the curtain. During this action, the curtain rollers 26 slide within the curtain rail channel 22 to facilitate movement of curtain 14 to the closed position.

In the closed position, the curtain pole 40 engages a ratchet mechanism to tension the curtain 14 horizontally. Thereafter, the actuator is operated to move the curtain rail assemblies 12 forward up the ramp plates 38 onto the plateau 44 of the ramp plates 38. This raises the curtain roller assembly 25, and consequently, the attached curtain 14. At the same time, the plurality of hooks 42 on the bottom horizontal edge of the curtain 14 engages the base of the (semi-)trailer body 16 to tension the curtain 14. As a result, the curtain 14 is tensioned horizontally and vertically to provide a taut curtain that can act as a load restraint. The curtain 14 also provides a flat appearance which makes printing or branding on the curtain visually pleasing.

In order to move the curtain to the open position, the curtain pole 40 is disengaged from the ratchet mechanism to release the horizontal tension.

The actuator is then operated to reverse the curtain rail assemblies 12 to move the rail rollers 20 down the ramp plates 38. This lowers the curtain rail assembly 12, and consequently, loosens the curtain 14 as the vertical tension is released. At the same time, the plurality of hooks 42 on the horizontal edge of the curtain 14 disengages from the base of the (semi-)trailer body 16.

The curtain 14 is then pulled along the length of the (semi-)trailer body 16 to the open position, wherein the curtain 14 becomes folded.

Both horizontal and vertical tensioning steps can be automated.

Accordingly, there is provided a curtain assembly that can be tensioned in a time efficient manner and provide a visually appealing surface for printing or branding.

## Claims

1. A curtain assembly for a vehicle body comprising:
a curtain rail;
a curtain that is slidable along the curtain rail to move the curtain between an open position and a closed position; and
an actuator that is operable to (i) raise and tension the curtain when the curtain is in the closed position and (ii) lower the curtain to release the tension, such that the curtain is movable to the open position.

2. The curtain assembly according to claim 1, wherein the actuator is operable to raise and lower the curtain rail.

3. The curtain assembly according to either claim 1 or 2, wherein the actuator is operable to move the curtain rail along a surface to raise the curtain.

4. The curtain assembly according to any one of the preceding claims including a profiled surface having troughs and crests on which the curtain rail is seated such that the curtain rail is raised and lowered when the actuator moves the curtain rail along the profiled surface.

5. The curtain assembly according to claim 4, wherein the curtain rail is slidably retained within a support rail including the profiled surface.

6. The curtain assembly according to either claim 4 or 5, wherein the profiled surface comprises a plurality of ramps, each having an inclined plane, positioned along the length of the support rail.

7. The curtain assembly according to any one of claims 4 to 6, wherein the actuator is operable to move the curtain rail forward and backward along the profiled surface.

8. The curtain assembly according to any one of the preceding claims, wherein the curtain includes top and bottom horizontal edges, wherein the top horizontal edge of the curtain is slidably mounted to the curtain rail and the bottom horizontal edge includes a plurality of attachment means for securing the bottom horizontal edge of the curtain to the vehicle body.

9. The curtain assembly according to any one of the preceding claims, wherein the curtain assembly is automated to move the curtain between the open and closed positions and/or raise and lower the curtain.

10. A method of operating a curtain on a vehicle body including the steps of:
sliding a curtain movably connected to a curtain rail to move the curtain between an open position to a closed position; and
raising and lowering the curtain to tension the curtain and release the tension such that the curtain is movable to the open position.

11. The method according to claim 10, wherein step of raising the curtain comprises lifting the curtain rail.

12. The method according to claim 10, wherein the step of raising the curtain rail comprises moving the curtain rail up an inclined plane.

13. The method according to any one of claims 10 to 12, including a step of engaging a bottom edge of the curtain to the vehicle body during raising of the curtain to facilitate tensioning of the curtain.

14. The method according to any one of claims 10 to 13, wherein the step of lowering the curtain involves lowering the curtain rail.

15. The method according to any one of claim 10 to 13, wherein the step of lowering the curtain rail involves moving the curtain rail down an inclined plane.
